# EUROPEAN PATENT SPECIFICATION

(11) **EP 3 273 327 B1**
(45) Date of publication and mention of the grant of the patent: **16.12.2020**
(21) Application number: 16180378.8
(22) Date of filing: 20.07.2016
(51) Int. Cl.: G06F 3/01, G06F 3/041

(54) **HAPTIC FEEDBACK USING VARIABLE SURFACE FRICTION OF A TOUCH SCREEN DISPLAY**
HAPTISCHE RÜCKMELDUNG MITTELS VARIABLER OBERFLÄCHENREIBUNG EINER BERÜHRUNGSBILDSCHIRMANZEIGE
RÉTROACTION HAPTIQUE À L'AIDE D'UNE FRICTION DE SURFACE VARIABLE D'UN ÉCRAN TACTILE

(43) Date of publication of application: 24.01.2018
(73) Proprietor: Vestel Elektronik Sanayi ve Ticaret A.S., 45030 Manisa (TR)
(72) Inventor: TAMER, Özgür, 45030 Manisa (TR); TÜRKORAL, Türker, 45030 Manisa (TR); KÖKLÜ, Tunca, 45030 Manisa (TR); ÖZTÜRK, Recep, 45030 Manisa (TR); GÜNDÜZALP, Mustafa, 45030 Manisa (TR); KIRISKEN, Barbaros, 45030 Manisa (TR)
(74) Representative: Kehl, Ascherl, Liebhoff & Ettmayr Patentanwälte Partnerschaft mbB

(56) References cited:
- EP-A1- 2 953 006

## Description

The present invention relates to a system for providing haptic feedback according to claim 1 and a method for providing haptic feedback by varying the surface friction of a touch-sensitive display screen according to claim 6.

### Background of the Invention

It is known to provide haptic feedback to a user through a touch-sensitive display screen by varying the surface friction of the screen experienced by the user using an electrostatic actuator, as mentioned, for example, in US 2014/0267069. An electrostatic actuator can vary the surface friction of a touch-sensitive display screen using electrovibration technology. Electrovibration is a technology whereby if a user moves, for example, his finger across an insulated conducting surface to which a time-varying voltage is applied, the user experiences a feeling of surface friction, so that the apparent roughness of the surface is changed. This surface friction may be created by a static electric field induced between the finger and the surface across which the finger is moved. The amount of surface friction experienced by the user can be varied by altering the voltage applied to the surface with the electrostatic actuator. EP 2 953 006 A1 describes systems and methods for induced electrostatic haptic effects. However, using such an electrostatic actuator requires that the actuator is integrated into the construction of an electronic device comprising the touch-sensitive display screen. It would therefore be advantageous to be able to vary the surface friction of the screen experienced by the user to provide haptic feedback to the user through the touch-sensitive display screen without requiring a special construction of the device comprising display screen in order to be able to do so.

### Object of the Invention

It is therefore an object of the invention to provide a system for providing haptic feedback to a user, and a method for providing haptic feedback to a user by varying the surface friction of a touch-sensitive display screen.

### Description of the Invention

The object of the invention is solved by a system for providing haptic feedback according to claim 1. The system for providing haptic feedback at least comprises an electronic device at least comprising a touch-sensitive display screen, and a magnetic loop actuator. The touch-sensitive display screen has a touchable surface coated with a transparent film which is able to provide a variable surface friction to the touchable surface in response to an externally applied electromagnetic field. The magnetic loop actuator is for applying the electromagnetic field to the film to vary the surface friction of the touchable surface. The magnetic loop actuator is external to the electronic device. The system further comprises a separable electrical connector between the electronic device and the magnetic loop actuator, a driver module, a triggering module and an application, wherein the driver module and the triggering module are external to the electronic device and the application is installed on the electronic device. The driver module is to drive the magnetic loop actuator to generate the electromagnetic field, and the triggering module is to trigger the driver module. The application is to receive a user input from the touch-sensitive display screen, to determine a haptic output to the user in response thereto, and to output a control signal to the triggering module to vary the surface friction of the touchable surface according to the haptic output thus determined.

In other words, the magnetic loop actuator is not embedded in or otherwise integrated into the electronic device, and the magnetic loop actuator and the electronic device are separate entities. Thus a known type of electronic device may be used without any special construction, just coated with a transparent film as described, and used in association with the magnetic loop actuator, in order to provide haptic feedback to a user by varying the surface friction of the touch-sensitive display screen. This solution is beneficial because even though the electronic device and the magnetic loop actuator are separate components of the system, the magnetic loop actuator may still be brought close enough to the electronic device for the transparent film coated on the touchable surface of the display screen to be electromagnetically coupled to the magnetic loop actuator. On the other hand, the magnetic loop actuator is located externally to the electronic device comprising the touch-sensitive display screen, making the system for providing haptic feedback of the invention very versatile and suitable for a wide range of applications.

The electronic device may, for example, be any of a tablet computer, an ebook reader, a mobile phone, a laptop computer, a games console, an in-car computer system, a medical device, a home or work computer system, a home automation system, an automatic teller machine (ATM) or sales checkout machine.

The touch-sensitive display screen may at least comprise one or more of capacitive, resistive and optical touch-sensing technologies. The touch-sensitive display screen may be a projected capacitive touch (PCT or PCAP) screen, for example. The transparent film coated on the touchable surface of the touch-sensitive display screen may be able to provide a variable surface friction to the touchable surface for example by becoming electrostatically charged in response to the externally applied electromagnetic field.

The magnetic loop actuator may at least comprise a plurality of loops of copper wire arranged to generate such an electromagnetic field, which is able to affect the transparent film coated on the touch-sensitive display screen in such a way as to provide haptic feedback in response to a user input via the touch-sensitive display screen.

Advantageous embodiments of the invention may be configured according to any claim and/or part of the following description.

The application may be installed on a central or auxiliary processing unit of the electronic device. The control signal may be transmitted by the application to the triggering module via a bus, or, for example if the triggering module is located remotely from an electronic device on which the application is installed, by wireless transmission.

For example, the application may detect a location of a user input on the touch-sensitive display screen and determine a feature to be generated at that location. The feature properties are transferred by the application to the triggering module, instructing it to generate an appropriate signal. This signal switches the driver module to drive the magnetic loop actuator in order to generate a haptic feedback at the location on the display screen corresponding to the feature determined by the application. The magnetic loop actuator driven by the switched signals from the driver module generates an electromagnetic field over the film coated on the touchable surface of the display screen. This electromagnetic field causes an effect on the touchable surface which feels like a frictional force, and which the user receives as a haptic feedback to the user input.

The triggering module may have its own embedded software (firmware). In a preferred embodiment, the triggering module at least comprises a memory for storing one or more waveforms corresponding to different haptic effects.

In such a case, as the user interacts with the touch-sensitive display screen, the magnetic loop actuator can provide haptic feedback via the transparent film coated on the touchable surface of the display screen via different electromagnetic signals triggered in accordance with the different stored waveforms. For example, if the user moves a finger across the touchable surface, the coefficient of friction felt by the user could be varied according to the detected position of the finger. If a plurality of different waveforms corresponding to different haptic effects is stored in the triggering module, then the magnetic loop actuator could, for example, be triggered according to the position of the user's finger on the touch-sensitive display screen and the stored waveform for that position. Examples of the stored waveforms are a bump, a border, an edge of an on-screen button, or a predefined texture, such as a sandy surface.

The driver module preferably provides a high-voltage source to the magnetic loop actuator and at least comprises a switching circuit to generate the electromagnetic field in the magnetic loop actuator.

Preferably, the driver module at least comprises an analogue-to-digital (A/D) or digital-to-digital (D/D) converter. This allows the driver module to convert the waveforms received from the triggering module into electromagnetic pulses suitable for transmission to the magnetic loop actuator.

In a preferred embodiment, the system further comprises a power supply module dedicated to the driver module, to supply electrical power to the driver module. The advantage of such a dedicated power supply is that it can provide the power necessary to generate the voltages and currents required for the driver module to act as a high-voltage source to the magnetic loop actuator.

The separable electrical connector may be located between the driver module and the magnetic loop actuator or between the electronic device and the triggering module, for example.

The present invention further relates to a method for providing haptic feedback according to claim 6. The method at least comprises installing the touch-sensitive display screen in an electronic device, coating a touchable surface of the touch-sensitive display screen with a transparent film which is able to provide a variable surface friction to the touchable surface in response to an externally applied electromagnetic field, applying the electromagnetic field to the film using a magnetic loop actuator spatially separated from the touch-sensitive display screen, and maintaining the magnetic loop actuator external to the electronic device.

The method for providing haptic feedback to a user further comprises receiving a user input from the touch-sensitive display screen, determining a haptic output to the user in response thereto, and outputting a control signal to vary the surface friction of the touchable surface according to the haptic output thus determined.

The present invention further relates to a computer program product or a program code or system for executing one or more than one of the herein described methods.

Further features, goals and advantages of the present invention will now be described in association with the accompanying drawings, in which exemplary components of the invention are illustrated. Components of the devices, systems and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1 is a schematic block diagram of a haptic feedback device;
Fig. 2 is a schematic diagram of an embodiment of an electronic device in a system for providing haptic feedback to a user; and
Fig. 3 is a schematic plan view of the internal structure of an embodiment of a magnetic loop actuator.

### Detailed Description

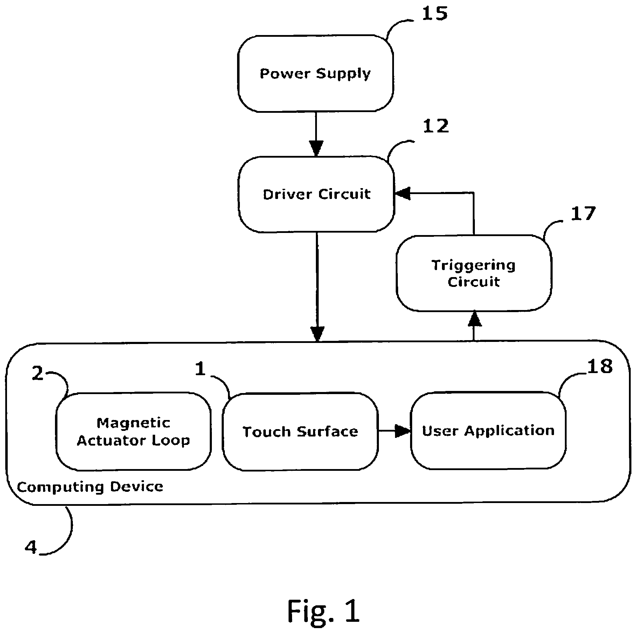

Fig. 1 schematically shows a haptic feedback device comprising a touch-sensitive display screen 1, a magnetic loop actuator 2, a driver module 12 to drive the magnetic loop actuator 2, a triggering module 17 to trigger the driver module 12, and a dedicated power supply 15 to supply electrical power to the driver module 12. The touch-sensitive display screen 1 has a touchable surface coated with a transparent film able to provide a variable surface friction to the touchable surface in response to an externally applied electromagnetic field. The magnetic loop actuator 2 is for applying the electromagnetic field to the film to vary the surface friction of the touchable surface.

In this case, the touch-sensitive display screen 1 and the magnetic loop actuator 2 are both contained within an electronic computing device 4. The electronic computing device 4 may be a smart phone or a tablet computer, for example. The electronic computing device 4 is installed with an application 18 to receive a user input from the touch-sensitive display screen 1, to determine a haptic output to the user in response to the user input, and to output a control signal to the triggering module 17 to vary the surface friction of the touchable surface according to the haptic output thus determined. The electronic computing device 4 comprises a central processing unit. The driver module 12 and the triggering module 17 are embedded hardware of the electronic computing device 4, each having their own dedicated software, and are linked to the central processing unit via a bus.

Although in this case, the touch-sensitive display screen 1 and the magnetic loop actuator 2 are both contained within the electronic computing device 4, the magnetic loop actuator 2 is spatially separated from the touch-sensitive display screen 1. Thus the magnetic loop actuator 2 may be contained within the electronic computing device 4 behind the touch-sensitive display screen 1 as a separate component from the touch-sensitive display screen 1, for example. The transparent film on the touchable surface of the touch-sensitive display screen 1 is nonetheless close enough to the magnetic loop actuator 2 for it to be electromagnetically coupled thereto. This arrangement allows the touchable surface of the touch-sensitive display screen 1 to provide haptic feedback to a user by a variation in the surface friction of the touch-sensitive display screen. On the other hand, it also allows the electronic computing device 4 to be manufactured quickly and easily, and more cheaply than if it were instead to comprise a touch-sensitive display screen with a special construction incorporating an electrostatic actuator, in order to vary the surface friction of the touch-sensitive display screen.

In this case, the triggering module 17 comprises a memory for storing one or more waveforms corresponding to different haptic effects. Thus, for example, the touchable surface of the touch-sensitive display screen 1 may be mapped to a graphical user interface. Different haptic effects can be selected by the user application 18 from the memory of the triggering module 17 based on the received user input, in order to simulate a feature like a texture, a button or an edge displayed on the display screen 1, by varying the electrostatic friction effect of the touchable surface to provide a haptic output, so that the features displayed on the screen 1 are "felt" by the user.

In order to generate this haptic output, the driver module 12 acts as a high-voltage source for the magnetic loop actuator 2. The driver module 12 comprises a switching circuit to generate the electromagnetic field in the magnetic loop actuator 2. The driver module 12 receives the selected waveforms from the triggering module 17 and comprises an analogue-to-digital (A/D) or digital-to-digital (D/D) converter to convert the received waveforms into electromagnetic pulses for transmission to the magnetic loop actuator 2. The driver module 12 has its own dedicated power supply 15 to provide the power to generate the voltages and currents necessary for this.

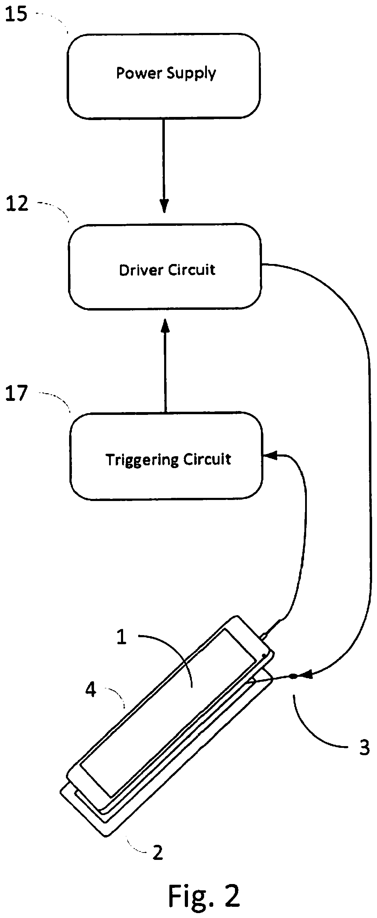

Fig. 2 schematically shows an embodiment of an electronic device 4 in a system for providing haptic feedback to a user according to the invention. In this system, the electronic device 4 comprises a touch-sensitive display screen 1 having a touchable surface coated with a transparent film able to provide a variable surface friction to the touchable surface in response to an externally applied electromagnetic field. As with Fig. 1, the electronic computing device 4 may again be a smart phone or a tablet computer, for example. Unlike the device shown in Fig. 1, however, the system of Fig. 2 further comprises a magnetic loop actuator 2 for applying the electromagnetic field to the film on the touchable surface of the touch-sensitive display screen 1 to vary the surface friction of the touchable surface, wherein the magnetic loop actuator 2 is external to the electronic device 4.

The system of Fig. 2 further comprises a driver module 12, a triggering module 17, an application 18 and a power supply 15, all of which are constructed and function similarly to as described above in relation to Fig. 1. However, the haptic feedback device in Fig. 2 further comprises a separable electrical connector 3 between the driver module 12 and the magnetic loop actuator 2. Thus, in this embodiment, the electronic device 4 may be disconnected from the magnetic loop actuator 2 at the location of the electrical connector 3 and the electronic device 4 may be transported to a location remote from the magnetic loop actuator 2. The system will only function to provide haptic feedback to a user once again if the electronic device 4 is brought back into sufficient proximity to the magnetic loop actuator 2 for the transparent film on the touchable surface of the touch-sensitive display screen 1 to be electromagnetically coupled to the magnetic loop actuator 2, and if the electronic device 4 is reconnected to the magnetic loop actuator 2 via the electrical connector 3. In this manner, the magnetic loop actuator 2 may be permanently installed, for example in or under a work surface, and the electronic device 4 may retain a mobile function, but haptic feedback will only be provided to a user via the screen 1 if the electronic device 4 is used on the work surface and connected to the magnetic loop actuator 2 as just described.

In alternative embodiments not represented in Fig. 2, the separable electrical connector 3 may instead be provided between the electronic device 4 and the triggering module 17, so that the triggering module 17, the driver module 12, the dedicated power supply 15 and the magnetic loop actuator 2 are all external to the electronic device 4. Thus the triggering module 17, the driver module 12, the power supply 15 and the magnetic loop actuator 2 can be maintained in a fixed location, whilst the electronic device 4 can retain a mobile function. This allows a conventional smart phone or tablet computer, for example, comprising a touch-sensitive display screen 1 having a touchable surface coated with a transparent film able to provide a variable surface friction to the touchable surface in response to an externally applied electromagnetic field to be connected to a dedicated device comprising the triggering module 17, the driver module 12, the power supply 15 and the magnetic loop actuator 2. In such a case, the user application 18 may be installed either on the electronic device 4 or on the dedicated device, or both.

Whereas in the embodiments described above, the electronic device 4 has been described by way of example to be a smart phone or tablet computer, the electronic device 4 could equally well be any of an ebook reader, a laptop computer, a home or work computer system, a games console, an in-car computer system, a medical device, a home automation system, an automatic teller machine (ATM) or a sales checkout machine.

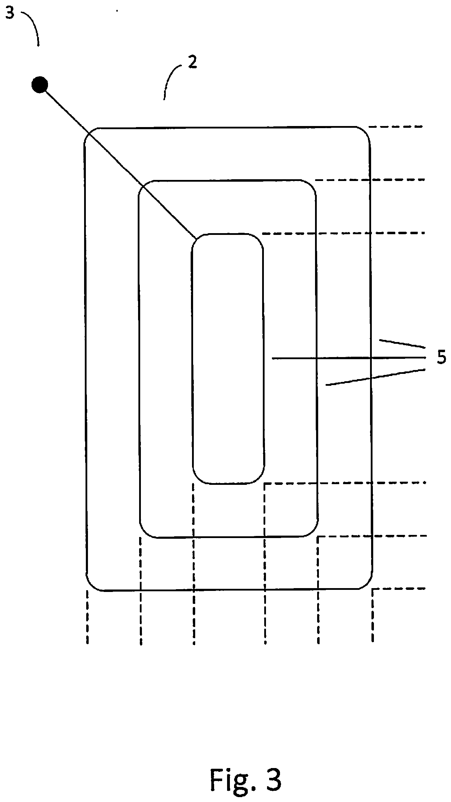

Fig. 3 schematically shows the internal structure of an embodiment of a magnetic loop actuator 2. The magnetic loop actuator 2 comprises a plurality of loops of copper wire 5 and a separable electrical connector 3 connected to the loops of copper wire 5. The electrical connector 3 is for connecting the magnetic loop actuator 2 to a driver module 12 in the manner described above in relation to Fig. 2. The loops of copper wire 5 are driven by the driver module 12 to generate an electromagnetic field for application to the transparent film on the touchable surface of the touch-sensitive display screen 1 of an electronic device 4, in order to generate haptic feedback to a user of the device by varying the surface friction of the touchable surface in the manner described above.

Thus, the present invention provides a method of varying the surface friction of a touch-sensitive display screen 1 by coating a touchable surface of the touch-sensitive display screen 1 with a transparent film able to provide a variable surface friction to the touchable surface in response to an externally applied electromagnetic field, and by applying the electromagnetic field to the film using a magnetic loop actuator 2, for example of the type shown in Fig. 3, wherein the magnetic loop actuator 2 is external to an electronic device comprising the touch-sensitive display screen 1. Even if the touch-sensitive display screen 1 is installed in an electronic device 4, the magnetic loop actuator 2 may be maintained external to the electronic device 4, as in the embodiment shown in Fig. 2.

The present invention also provides a method for providing haptic feedback to a user comprising such a method of varying the surface friction of a touch-sensitive display screen, and further comprising receiving a user input from the touch-sensitive display screen 1, determining a haptic output to the user in response thereto, and outputting a control signal to vary the surface friction of the touchable surface according to the haptic output thus determined. These steps may be carried out by a user application installed on an electronic device 4 at least comprising the touch-sensitive display screen 1.

In summary, therefore, the present invention provides a system for providing haptic feedback to a user, wherein the system comprises an electronic device at least comprising a touch-sensitive display screen, and a magnetic loop actuator. The touch-sensitive display screen has a touchable surface coated with a transparent film which is able to provide a variable surface friction to the touchable surface in response to an externally applied electromagnetic field.

The magnetic loop actuator is for applying the electromagnetic field to the film to vary the surface friction of the touchable surface. The magnetic loop actuator is external to the electronic device. The system further comprises a driver module to drive the magnetic loop actuator to generate the electromagnetic field, a triggering module to trigger the driver module, and an application to receive a user input from the touch-sensitive display screen, to determine a haptic output to the user in response thereto, and to output a control signal to the triggering module to vary the surface friction of the touchable surface according to the haptic output thus determined. The touch-sensitive display screen is installed as a component of the electronic device and the magnetic loop actuator is maintained external to the electronic device comprising such a touch-sensitive display screen. In this way, the surface friction of the touch-sensitive display screen may be varied to provide haptic feedback to a user without requiring a special construction of the touch-sensitive display screen or of the electronic device.

### Reference Numerals:

- 1: Touch screen
- 2: Magnetic loop actuator
- 3: Magnetic loop connector
- 4: Electronic device
- 5: Copper wires

## Claims

1. A system for providing haptic feedback to a user, the system at least comprising:
an electronic device (4) at least comprising a touch-sensitive display screen (1) having a touchable surface coated with a transparent film able to provide a variable surface friction to the touchable surface in response to an externally applied electromagnetic field; and
a magnetic loop actuator (2) for applying the electromagnetic field to the film to vary the surface friction of the touchable surface;
**characterized in that**:
the magnetic loop actuator (2) is external to the electronic device (4), and **in that** the system further comprises:
a separable electrical connector (3) between the electronic device (4) and the magnetic loop actuator (2);
a driver module (12) to drive the magnetic loop actuator (2) to generate the electromagnetic field; and
a triggering module (17) to trigger the driver module (12);
wherein the driver module (12) and the triggering module (17) are external to the electronic device (4); and
wherein the electronic device (4) is installed with an application (18) configured to receive a user input from the touch-sensitive display screen (1), to determine a haptic output to the user in response thereto, and to output a control signal to the triggering module (17) to vary the surface friction of the touchable surface according to the haptic output thus determined.

2. The system according to claim 1, wherein the triggering module (17) at least comprises a memory for storing one or more waveforms corresponding to different haptic effects.

3. The system according to claim 1 or claim 2, wherein the driver module (12) provides a high-voltage source to the magnetic loop actuator (2) and at least comprises a switching circuit to generate the electromagnetic field in the magnetic loop actuator.

4. The system according to any one of claims 1 to 3, wherein the driver module (12) at least comprises an analogue-to-digital (A/D) or digital-to-digital (D/D) converter.

5. The system according to any one of claims 1 to 4, further comprising a dedicated power supply module (15) to supply electrical power to the driver module (12).

6. A method for providing haptic feedback to a user by varying the surface friction of a touch-sensitive display screen (1), the method at least comprising:
installing the touch-sensitive display screen (1) in an electronic device (4);
coating a touchable surface of the touch-sensitive display screen (1) with a transparent film able to provide a variable surface friction to the touchable surface in response to an electromagnetic field applied externally from the electronic device (4); and
applying the electromagnetic field to the film using a magnetic loop actuator (2) spatially separated from the touch-sensitive display screen (1);
**characterized by**:
maintaining the magnetic loop actuator (2) external to the electronic device and connecting the magnetic loop actuator (2) with the electronic device via a separable electrical connector (3);
receiving, by an application (18) installed in the electronic device (4), a user input from the touch-sensitive display screen (1);
determining, by the application (18), a haptic output to the user in response thereto; and
outputting, by the application (18), a control signal to the magnetic loop actuator (2) to vary the surface friction of the touchable surface according to the haptic output thus determined.

## Patentansprüche

1. System zur Bereitstellung einer haptischen Rückmeldung an einen Benutzer, wobei das System mindestens Folgendes umfasst
eine elektronische Vorrichtung (4), die mindestens einen berührungsempfindlichen Anzeigebildschirm (1) mit einer berührbaren Oberfläche aufweist, die mit einem transparenten Film beschichtet ist, der in der Lage ist, der berührbaren Oberfläche als Reaktion auf ein extern angelegtes elektromagnetisches Feld eine variable Oberflächenreibung zu verleihen; und
einen Magnetschleifenaktuator (2) zum Anlegen des elektromagnetischen Feldes an den Film, um die Oberflächenreibung der berührbaren Oberfläche zu variieren;
**dadurch gekennzeichnet**:
der Magnetschleifen-Aktuator (2) außerhalb der elektronischen Vorrichtung (4) liegt, und dass das System ferner umfasst:
einen trennbaren elektrischen Verbinder (3) zwischen dem elektronischen Gerät (4) und dem Magnetschleifen-Aktuator (2);
ein Treibermodul (12) zum Ansteuern des Magnetschleifenaktuators (2), um das elektromagnetische Feld zu erzeugen; und
ein Auslösemodul (17) zur Auslösung des Treibermoduls (12);
wobei das Treibermodul (12) und das Auslösemodul (17) außerhalb der elektronischen Vorrichtung (4) liegen; und
wobei die elektronische Vorrichtung (4) mit einer Anwendung (18) installiert ist, die so konfiguriert ist, dass sie eine Benutzereingabe von dem berührungsempfindlichen Anzeigebildschirm (1) empfängt, eine haptische Ausgabe an den Benutzer als Reaktion darauf bestimmt und ein Steuersignal an das Auslösemodul (17) ausgibt, um die Oberflächenreibung der berührbaren Oberfläche gemäß der so bestimmten haptischen Ausgabe zu variieren.

2. System nach Anspruch 1, bei dem das Auslösemodul (17) mindestens einen Speicher zur Speicherung einer oder mehrerer Wellenformen, die unterschiedlichen haptischen Effekten entsprechen, aufweist.

3. System nach Anspruch 1 oder Anspruch 2, wobei das Treibermodul (12) eine Hochspannungsquelle für den Magnetschleifenaktuator (2) bereitstellt und mindestens einen Schaltkreis zur Erzeugung des elektromagnetischen Feldes im Magnetschleifenaktuator umfasst.

4. System nach einem der Ansprüche 1 bis 3, wobei das Treibermodul (12) mindestens einen Analog-Digital (A/D)- oder Digital-Digital (D/D)-Wandler umfasst.

5. Das System nach einem der Ansprüche 1 bis 4, ferner mit einem speziellen Stromversorgungsmodul (15) zur Versorgung des Treibermoduls (12) mit elektrischer Energie.

6. ein Verfahren zum Bereitstellen einer haptischen Rückmeldung an einen Benutzer durch Variieren der Oberflächenreibung eines berührungsempfindlichen Bildschirms (1), wobei das Verfahren zumindest umfasst:
Einbau des berührungsempfindlichen Bildschirms (1) in ein elektronisches Gerät (4);
Beschichten einer berührbaren Oberfläche des berührungsempfindlichen Anzeigebildschirms (1) mit einem transparenten Film, der in der Lage ist, eine variable Oberflächenreibung an der berührbaren Oberfläche als Reaktion auf ein elektromagnetisches Feld zu erzeugen, das extern von der elektronischen Vorrichtung (4) angelegt wird; und
Anlegen des elektromagnetischen Feldes an den Film unter Verwendung eines Magnetschleifenaktuators (2), der räumlich von dem berührungsempfindlichen Bildschirm (1) getrennt ist;
**gekennzeichnet durch**:
Beibehalten des Magnetschleifenaktuators (2) außerhalb der elektronischen Vorrichtung und Verbinden des Magnetschleifenaktuators (2) mit der elektronischen Vorrichtung über einen trennbaren elektrischen Verbinder (3);
durch eine Anwendung (18), die in dem elektronischen Gerät (4) installiert ist, eine Benutzereingabe vom berührungsempfindlichen Bildschirm (1) erhält;
durch die Anwendung (18) eine haptische Ausgabe an den Benutzer als Antwort darauf zu bestimmen; und
Ausgabe, durch die Anwendung (18), eines Steuersignals an das magnetische Stellglied (2), um die Oberflächenreibung der berührbaren Oberfläche entsprechend der so bestimmten haptischen Ausgabe zu variieren.

## Revendications

1. Un système permettant de fournir un retour d'information haptique à un utilisateur, le système comprenant au moins :
un dispositif électronique (4) comprenant au moins un écran d'affichage tactile (1) ayant une surface tactile revêtue d'un film transparent capable de fournir une friction de surface variable à la surface tactile en réponse à un champ électromagnétique appliqué de l'extérieur; et
un actionneur à boucle magnétique (2) pour appliquer le champ électromagnétique au film afin de faire varier le frottement de la surface tactile ;
**caractérisé en ce que** :
l'actionneur à boucle magnétique (2) est externe au dispositif électronique (4), et **en ce que** le système comprend en outre
un connecteur électrique séparable (3) entre le dispositif électronique (4) et l'actionneur à boucle magnétique (2) ;
un module de commande (12) pour commander l'actionneur à boucle magnétique (2) afin de générer le champ électromagnétique ; et
un module de déclenchement (17) pour déclencher le module conducteur (12) ;
dans lequel le module conducteur (12) et le module de déclenchement (17) sont externes au dispositif électronique (4) ; et
dans lequel le dispositif électronique (4) est installé avec une application (18) configurée pour recevoir une entrée de l'utilisateur à partir de l'écran d'affichage tactile (1), pour déterminer une sortie haptique vers l'utilisateur en réponse à celle-ci, et pour émettre un signal de commande vers le module de déclenchement (17) afin de faire varier le frottement de la surface tactile en fonction de la sortie haptique ainsi déterminée.

2. Système selon la revendication 1, dans lequel le module de déclenchement (17) comprend au moins une mémoire pour stocker une ou plusieurs formes d'onde correspondant à différents effets haptiques.

3. Système selon la revendication 1 ou la revendication 2, dans lequel le module de déclenchement (12) fournit une source de haute tension à l'actionneur à boucle magnétique (2) et comprend au moins un circuit de commutation pour générer le champ électromagnétique dans l'actionneur à boucle magnétique.

4. Système selon l'une quelconque des revendications 1 à 3, dans lequel le module de commande (12) comprend au moins un convertisseur analogique-numérique (A/D) ou numérique-numérique (D/D).

5. Le système selon l'une quelconque des revendications 1 à 4, comprenant en outre un module d'alimentation électrique dédié (15) pour fournir de l'énergie électrique au module conducteur (12).

6. Une méthode pour fournir un retour d'information haptique à un utilisateur en faisant varier le frottement de surface d'un écran d'affichage tactile (1), la méthode comprenant au moins :
l'installation de l'écran d'affichage tactile (1) dans un dispositif électronique (4) ;
le revêtement d'une surface tactile de l'écran d'affichage tactile (1) avec un film transparent capable de fournir un frottement de surface variable à la surface tactile en réponse à un champ électromagnétique appliqué à l'extérieur du dispositif électronique (4) ; et
l'application du champ électromagnétique sur le film à l'aide d'un actionneur à boucle magnétique (2) spatialement séparé de l'écran d'affichage tactile (1) ;
**caractérisé par** :
le maintien de l'actionneur à boucle magnétique (2) à l'extérieur du dispositif électronique et la connexion de l'actionneur à boucle magnétique (2) avec le dispositif électronique via un connecteur électrique séparable (3) ;
la réception, par une application (18) installée dans le dispositif électronique (4), d'une entrée de l'utilisateur à partir de l'écran d'affichage tactile (1) ;
la détermination, par l'application (18), d'une sortie haptique à l'utilisateur en réponse à cette entrée ; et
l'émission, par l'application (18), d'un signal de commande à l'actionneur à boucle magnétique (2) pour faire varier le frottement de la surface tactile en fonction de la sortie haptique ainsi déterminée.
